# EUROPÄISCHE PATENTANMELDUNG

(11) **EP 3 358 721 A1**
(43) Veröffentlichungstag der Anmeldung: **08.08.2018**
(21) Anmeldenummer: 17154960.3
(22) Anmeldetag: 07.02.2017
(51) Int. Cl.: H02K 5/20, H02K 5/22

(54) **ANORDNUNG EINES ANSCHLUSSES AN EINER STIRNSEITE EINER ELEKTRISCHEN MASCHINE**

(71) Anmelder: Siemens Aktiengesellschaft, 80333 München (DE)
(72) Erfinder: Schmidt, Valerias, 90471 Nürnberg (DE)

(57) **Zusammenfassung**

Die Erfindung betrifft ein Gehäuse (1) für eine elektrische Maschine (2), mit
- einem elektrischen Anschluss (4), über welchen ein Versorgen der elektrischen Maschine (2) mit elektrischer Energie ermöglicht ist,
- einem Fluidkanal (12) zur Aufnahme eines Fluids (15) zur Kühlung der elektrischen Maschine (2), und
- einem Fluidanschluss (3), über welchen der Fluidkanal (12) mit dem Fluid (15) befüllbar und/oder entleerbar ist, wobei
- das Gehäuse (1) eine Gehäusewandung (10) aufweist, die eine axiale Ausdehnung (54) zwischen zwei Stirnseiten (14) entlang einer ersten Raumrichtung (50) und eine radiale Ausdehnung mit einem Ausdehnungsradius (53) entlang zweier weiterer Raumrichtungen (51,52) aufweist.

Um eine gegenüber dem Stand der Technik bessere Ausnutzung beziehungsweise Ausschöpfung eines radial begrenzten Einbauraumes zu ermöglichen, ist erfindungsgemäß vorgesehen, dass der elektrische Anschluss (4) und/oder der Fluidanschluss (3) an einer der Stirnseiten (14) und bezüglich der zwei weiteren Raumrichtungen (51,52) innerhalb des Ausdehnungsradius (53) angeordnet sind.

## Beschreibung

Die Erfindung betrifft ein Gehäuse für eine elektrische Maschine mit einem elektrischen Anschluss und einem Fluidanschluss. Die Erfindung betrifft außerdem eine elektrische Maschine mit einem solchen Gehäuse. Ein dritter Aspekt der Erfindung betrifft ein Fahrzeug mit der genannten elektrischen Maschine.

Für eine elektrische Maschine steht häufig ein begrenzter, insbesondere radial begrenzter, Einbauraum zur Verfügung. Dabei kann es eine Zielsetzung sein, bezogen auf den Einbauraum eine maximale Leistungsdichte für die elektrische Maschine zu erzielen. Beispielsweise ist die elektrische Maschine war Fluid gekühlt, beispielsweise Wasser gekühlt, und weist einen Fluidanschluss auf. Aus dem weist die elektrische Maschine einen elektrischen Anschluss auf.

Es ist Aufgabe der vorliegenden Erfindung, eine gegenüber dem Stand der Technik verbesserte Ausnutzung eines radial begrenzten Einbauraumes für eine elektrische Maschine zu ermöglichen.

Diese Aufgabe wird erfindungsgemäß gelöst durch ein Gehäuse für eine elektrische Maschine mit den Merkmalen des Patentanspruchs 1. Die Aufgabe wird außerdem gelöst durch eine elektrische Maschine mit den Merkmalen des Patentanspruchs 10. Und durch ein Fahrzeug mit den Merkmalen des Patentanspruchs 11. Vorteilhafte Ausführungsformen mit zweckmäßigen Weiterbildungen des erfindungsgemäßen Gehäuses sind Gegenstand der Unteransprüche und bilden analog auch die erfindungsgemäße elektrische Maschine und das erfindungsgemäße Fahrzeug weiter.

Ein Gehäuse für eine elektrische Maschine weist einen elektrischen Anschluss auf, über welchen ein Versorgen der elektrischen Maschine mit elektrischer Energie ermöglicht ist. Insbesondere ermöglicht der elektrische Anschluss ein Kontaktieren zumindest einer Windung der elektrischen Maschine mit einer elektrischen Energiequelle. Das Gehäuse umfasst außerdem einen Fluidkanal zur Aufnahme eines Fluid zur Kühlung der elektrischen Maschine. Beispielsweise ist der Fluidkanal mäanderförmig oder spiralförmig ausgeführt. Das Gehäuse weist einen Fluidanschluss auf, über welchen der Fluidkanal mit dem Fluid befüllbar und/oder entleerbar ist.

Das Gehäuse weist eine Gehäusewandung auf, die eine axiale Ausdehnung zwischen zwei Stirnseiten entlang einer ersten Raumrichtung und eine radiale Ausdehnung mit einem Ausdehnungsradius entlang zweier weiterer Raumrichtungen aufweist. Insbesondere ist eine Ausdehnung der Gehäusewandung bezüglich der zwei weiteren Raumrichtungen zumindest im Wesentlichen durch den Ausdehnungsradius beschrieben. Vorzugsweise gibt der Ausdehnungsradius eine maximale Ausdehnung der Gehäusewandung bezüglich der zwei weiteren Raumrichtungen an. Die Gehäusewandung kann derart ausgeformt sein, dass diese maximal um ein vorbestimmtes Maß von dem Ausdehnungsradius abweicht. Vorzugsweise ist der Ausdehnungsradius an einen Einbauradius eines radial begrenzten Einbauraumes angepasst.

Um eine gegenüber dem Stand der Technik bessere Ausnutzung beziehungsweise Ausschöpfung des radial begrenzten Einbauraumes zu ermöglichen, ist erfindungsgemäß vorgesehen, dass der elektrische Anschluss und/oder der Fluidanschluss an einer der Stirnseiten und bezüglich der zwei weiteren Raumrichtungen innerhalb des Ausdehnungsradius angeordnet sind. Vorzugsweise sind sowohl der elektrische Anschluss als auch der Fluidanschluss an einer der Stirnseiten und bezüglich der zwei weiteren Raumrichtungen innerhalb des Ausdehnungsradius angeordnet. Mit anderen Worten sind elektrische Anschluss und oder der Fluidanschluss nicht radial außenseitig an dem Gehäuse angeordnet. Der Fluidanschluss und der elektrische Anschluss können jeweils an einer unterschiedlichen der Stirnseiten oder an derselben der Stirnseiten angeordnet sein. Die erfindungsgemäße Anordnung des elektrischen Anschlusses und/oder des Fluidanschlusses ermöglicht ein besonders vorteilhaftes Anpassen des Ausdehnungsradius der Gehäusewandung an den radial begrenzten Einbauraum. Insbesondere kann der radial begrenzte Einbauraum durch das Gehäuse auf diese Weise vollständig ausgenutzt werden.

Eine Weiterbildung der Erfindung sieht vor, dass die Gehäusewandung zumindest im Wesentlichen als Zylinder ausgebildet ist, wobei der Ausdehnungsradius einem Zylinderradius und die zwei Stirnseiten Schnittkreisflächen des Zylinders entsprechen. Eine im Wesentlichen als Zylinder ausgebildete Gehäusewandung ermöglicht eine vorteilhafte Ausnutzung des radial begrenzten Einbauraumes und/oder ermöglicht ein besonders vorteilhaftes Umschließen der elektrischen Maschine, wenn diese zumindest im Wesentlichen rotationssymmetrisch ausgeführt ist. Insbesondere ist die Gehäusewandung als eine Mantelfläche des Zylinders ausgebildet.

Eine Weiterbildung sieht vor, dass der Fluidanschluss einen Zulauf und einen Ablauf umfasst. Der Zulauf kann ein Befüllen des Fluidkanals mit dem Fluid ermöglichen und der Ablauf kann ein Entleeren des Fluidkanals ermöglichen. In einem Zusammenspiel können der Zulauf und der Ablauf ein Durchströmen des Fluidkanals mit dem Fluid ermöglichen. Dadurch ist ein Abführen von Wärme aus dem Gehäuse und/oder von der elektrischen Maschine ermöglicht. Insbesondere sind der Zulauf und der Ablauf an derselben der Stirnseiten, vorzugsweise nebeneinander, angeordnet. Demnach ist der Fluidkanal insbesondere derart ausgeformt, dass Anfang und Ende des Kühlkanals zu derselben der Stirnseiten geführt sind. Vorzugsweise ist der Fluidkanal unverzweigt.

Eine Weiterbildung sieht vor, dass der elektrische Anschluss mehrere Phasenanschlüsse umfasst. In diesem Fall ermöglicht der elektrische Anschluss das Versorgen der elektrischen Maschine mit elektrischer Energie über mehrere Phasenstränge. Beispielsweise handelt es sich bei der elektrischen Maschine um eine Drehstrommaschine. Vorzugsweise weist der elektrische Anschluss drei Phasenanschlüsse zum Versorgen der Drehstrommaschine mit elektrischer Energie auf.

Eine Weiterbildung sieht vor, dass der elektrische Anschluss mittels eines Klemmenkastens realisiert ist. Der Klemmenkasten kann einen oder mehrere Kabelschuhe umfassen, welche jeweils ein elektrisches Kontaktieren ermöglichen. Insbesondere weist der Klemmenkasten für jeden Phasenstrang einen Kabelschuh auf. Jeder der Kabelschuhe kann mit einer Windung der elektrischen Maschine elektrisch kontaktiert sein. Der Klemmenkasten ermöglicht eine besonders leichte Handhabung des elektrischen Anschlusses.

Eine Weiterbildung der Erfindung sieht vor, dass die zwei Stirnseiten jeweils als Lagerschild ausgebildet sind, wobei der elektrische Anschluss und/oder der Fluidanschluss als Teil des Lagerschildes ausgebildet sind. Mit anderen Worten kann der elektrische Anschluss und/oder der Fluidanschluss in den Lagerschild integriert sein. Das Gehäuse kann als Ständergehäuse der elektrischen Maschine ausgebildet sein. Durch diese Form der Ausführung kann eine besonders kompakte Bauform des Gehäuses und der elektrischen Maschine ermöglicht sein.

Eine Weiterbildung der Erfindung sieht vor, dass der elektrische Anschluss und/oder der Fluidanschluss jeweils als separates Teil an einer der zwei Stirnseiten angeordnet sind. Mit anderen Worten können der elektrische Anschluss und/oder der Fluidanschluss als separates Teil an dem Gehäuse, insbesondere an einer der zwei Stirnseiten, vorzugsweise an dem Lagerschild, angeordnet sein. Auf diese Weise kann abhängig von einem Einsatzzweck ein jeweils passender elektrische Anschluss und/oder Fluidanschluss an dem Gehäuse angeordnet sein.

Eine Weiterbildung sieht vor, dass der Fluidkanal Teil eines Kühlmantels ist und der Fluidanschluss durch eine der Stirnseiten hindurch mit dem Fluidkanal beziehungsweise dem Kühlmantel verbunden ist. Vorzugsweise umfasst der Kühlmantel die Gehäusewandung zumindest teilweise. Der Fluidanschluss und der Fluidkanal können somit durch die Stirnseite, insbesondere durch das Lagerschild, hindurch verbunden sein. Vorzugsweise weist die Stirnseite, insbesondere das Lagerschild zwei Durchführungen, zum Verbinden eines der Enden des Kühlkanals mit dem Zulauf und des anderen der Enden des Fluidkanals mit dem Ablauf auf.

In einer Weiterbildung erstrecken sich der Fluidkanal und/oder der Kühlmantel in axialer Richtung über das gesamte Gehäuse. Insbesondere erstrecken sich der Fluidkanal und/oder der Kühlmantel in axialer Richtung über das gesamte Gehäuse zwischen den zwei Stirnseiten, insbesondere zwischen den zwei Lagerschilden. Vorzugsweise erstrecken sich der Kühlmantel und/oder der Fluidkanal über die gesamte Mantelfläche des Gehäuses.

Ein zweiter Aspekt der Erfindung betrifft eine elektrische Maschine mit einem im vorherigen beschriebenen Gehäuse. Das Gehäuse ist insbesondere als Ständergehäuse der elektrischen Maschine ausgebildet. Dadurch, dadurch dass das Gehäuse eine vorteilhafte Ausnutzung des radial begrenzten Einbauraums ermöglicht, ist ein maximaler Außendurchmesser der elektrischen Maschine ermöglicht. Insbesondere ist ein in Bezug auf den radial begrenzten Einbauraum maximaler Außendurchmesser für ein Aktivteil, insbesondere ein Ständerdynamoblech, der elektrischen Maschine ermöglicht. Dadurch kann eine maximale Leistungsdichte der elektrischen Maschine in Bezug auf den radial begrenzten Einbauraum ermöglicht sein. Die Anordnung des Fluidanschlusses an einer der Stirnseiten kann eine vorteilhafte Kühlung der elektrischen Maschine, insbesondere des Aktivteils, ermöglicht sein, da sich der Fluidkanal, insbesondere der Kühlmantel, in axialer Ausrichtung über die gesamte elektrische Maschine erstrecken kann.

Ein dritter Aspekt Erfindung betrifft ein Fahrzeug mit der oben genannten elektrischen Maschine. Bei dem Fahrzeug handelt es sich insbesondere um ein Kraftfahrzeug, vorzugsweise um einen Kraftwagen, beispielsweise um einen Lastkraftwagen, einen Personenkraftwagen oder ein Minenfahrzeug. Die elektrische Maschine kann als Fahrmotor ausgebildet sein, um das Fahrzeug zu beschleunigen. Alternativ oder zusätzlich kann die elektrische Maschine als Arbeitsantrieb ausgebildet sein, und beispielsweise eine Kraft und/oder ein Drehmoment zum Antreiben eines Werkzeugs, eines Förderbandes oder einer weiteren Fahrzeugfunktion bereitstellen.

Weitere Merkmale und Vorteile sind der folgenden Beschreibung anhand der beigefügten Figuren zu entnehmen. In den Figuren bezeichnen gleiche Bezugszeichen gleiche Merkmale und Funktionen. Die Ausführungsbeispiele dienen lediglich der Erläuterung der Erfindung und sollen diese nicht beschränken. Es zeigen:
- FIG 1: eine schematische Perspektivansicht einer elektrischen Maschine mit einem Gehäuse;
- FIG 2: eine schematische Schnittansicht eines Klemmenkastens, der einen elektrischen Anschluss umfasst; und
- FIG 3: eine weitere schematische Perspektivansicht der elektrischen Maschine mit einem Kühlkanal.

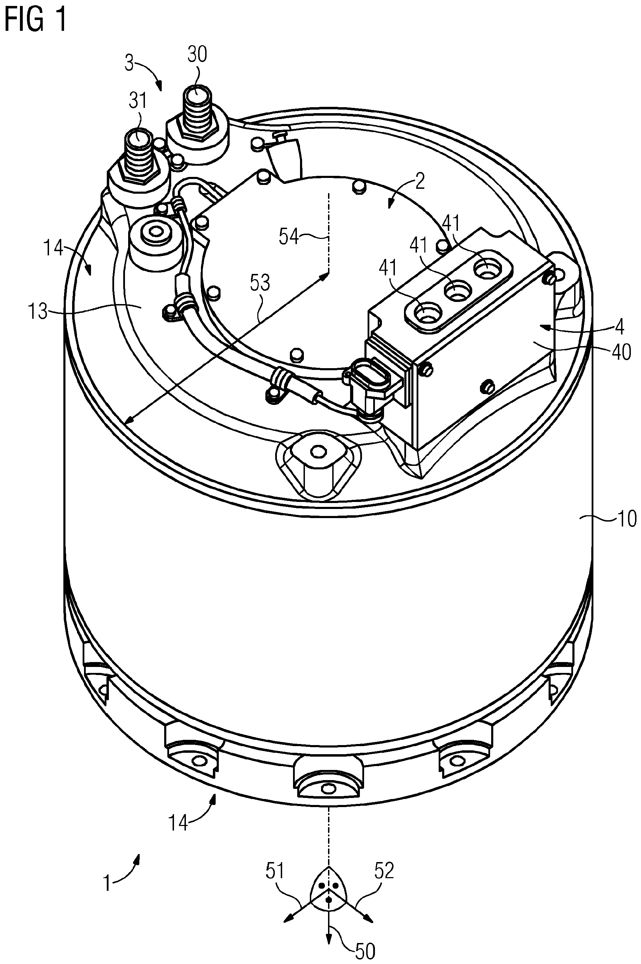

FIG 1 zeigt eine schematische Perspektivansicht einer elektrischen Maschine 2 mit einem Gehäuse 1. Das Gehäuse 1 weist eine Gehäusewandung 10 auf, die eine axiale Ausdehnung zwischen zwei Stirnseiten 14 entlang einer ersten Raumrichtung 50 aufweist. Die Gehäusewandung 10 weist eine radiale Ausdehnung mit einem Ausdehnungsradius 53 entlang zweier weiterer Raumrichtungen 51, 52 auf. Die erste Raumrichtung 50 sowie die zwei weiteren Raumrichtungen 51, 52 können dabei senkrecht aufeinander stehen. Der Ausdehnungsradius 53 beschreibt insbesondere eine maximale radiale Ausdehnung der Gehäusewandung 10 senkrecht zu der ersten Raumrichtung 50. Das Gehäuse 1 umfasst einen elektrischen Anschluss 4 über welchen ein Versorgen der elektrischen Maschine 2 mit elektrischer Energie ermöglicht ist.

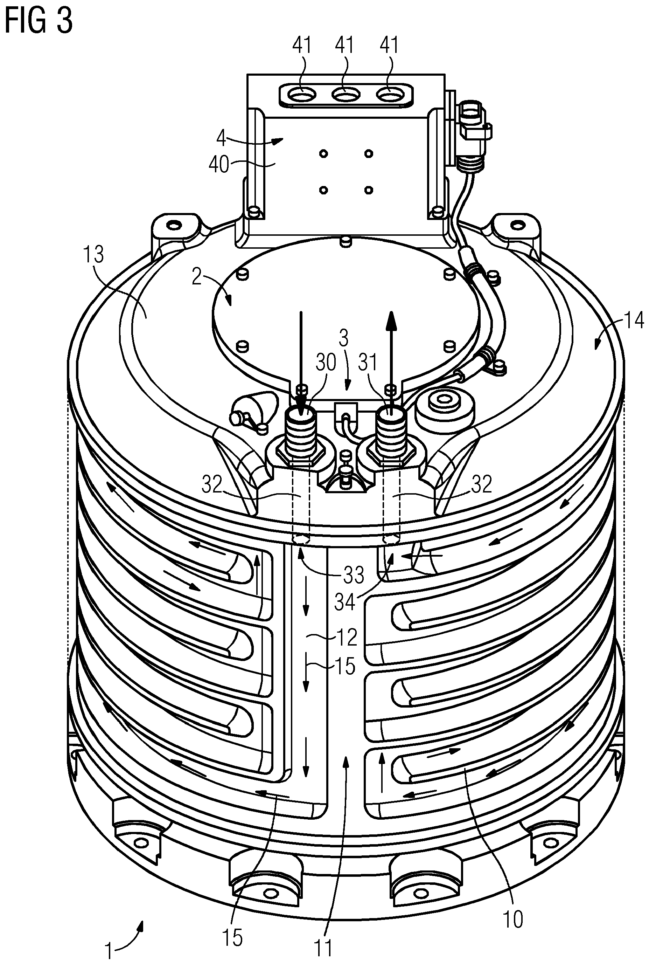

FIG 3 zeigt die elektrische Maschine 2 in einer weiteren schematischen Perspektivansicht. Dabei ist in FIG 3 die Gehäusewandung 10 teilweise transparent dargestellt. Aufgrund dieser Darstellung geht aus FIG 3 hervor, dass die Gehäusewandung 10 als Teil eines Kühlmantels 11 ausgeführt ist. Das Gehäuse 1 beziehungsweise die Gehäusewandung 10 umfasst einen Fluidkanal 12, der zur Aufnahme eines Fluid 15 zur Kühlung der elektrischen Maschine 2 und/oder des Gehäuses 1 ausgebildet ist. Das Gehäuse 1 umfasst einen Fluidanschluss 3, über welchen der Fluidkanal 12 mit dem Fluid 15 befüllbar und/oder entleerbar ist. Vorliegend umfasst der Fluidanschluss 3 einen Zulauf 30 und ein Ablauf 31. Der Zulauf 30 und der Ablauf 31 ermöglichen im Zusammenspiel ein Durchströmen des Fluidkanals 12 durch das Fluid 15.

Vorliegend sind der elektrische Anschluss 4 und der Fluidanschluss 3 an einer der Stirnseiten 14 des Gehäuses 1 angeordnet. Insbesondere sind der elektrische Anschluss 4 und der Fluidanschluss 3 bezüglich der zwei weiteren Raumrichtungen 51, 52 innerhalb des Ausdehnungsradius 53 angeordnet. Dadurch kann eine gegenüber dem Stand der Technik bessere Ausnutzung eines radial begrenzten Einbauraumes ermöglicht sein. Insbesondere ist durch die vorliegende Anordnung des Fluidanschlusses 3 und des elektrischen Anschlusses 4 eine vollständige Ausnutzung eines Einbauradius des radial begrenzten Einbauraumes ermöglicht. Der Ausdehnungsradius 53 der Gehäusewandung 10 kann insbesondere dem Einbauradius entsprechen. Insbesondere ist radial außenseitig an dem Gehäuse 1 kein Einbauraum für den elektrischen Anschluss 4 und/oder den Fluidanschluss 3 nötig.

Die Gehäusewandung 10 kann im Wesentlichen als Zylinder ausgebildet sein. In diesem Fall kann der Ausdehnungsradius 53 einem Zylinderradius des Zylinders entsprechen. Alternativ oder zusätzlich können die zwei Stirnseiten 14 Schnittkreisflächen des Zylinders entsprechen. Partiell kann die Gehäusewandung 10 von der Zylinderform abweichen, ohne die Funktion im Wesentlichen zu verändern. Weicht die Formgebung der Gehäusewandung 10 von der Zylinderform ab, so kann der Ausdehnungsradius 53 den maximalen Abstand der Gehäusewandung 10 von einer axialen Ausrichtung 54 bezüglich der zwei weiteren Raumrichtungen 51, 52 angeben. Die axiale Ausrichtung 54 entspricht insbesondere eine Rotationsachse von Rotieren gelagerten Maschinenteilen der elektrischen Maschine 2, beispielsweise einer Welle oder einem Rotor. Die erste Raumrichtung 50 kann parallel zu der axialen Ausrichtung 54 verlaufen. Es kann vorgesehen sein, dass die Gehäusewandung 10 maximal um ein vorbestimmtes Maß von einem durch den Ausdehnungsradius 53 vorgegebenen Zylindermantel abweicht.

Eine oder beide der zwei Stirnseiten 14 können jeweils als Lagerschild 13 ausgebildet sein. Das Lagerschild 13 kann dazu ausgebildet sein, rotierend gelagerte Teile der elektrischen Maschine 2 zu lagern. Beispielsweise ist an dem Lagerschild 13 die Welle oder der Rotor der elektrischen Maschine 2 gelagert. Der elektrische Anschluss 4 und/oder der Fluidanschluss 3 können anderen, nicht gezeigten Ausführungsformen als Teil des Lagerschildes 13 ausgebildet sein. Insbesondere können der Fluidanschluss 3 und/oder der elektrische Anschluss 4 zumindest teilweise in den Lagerschild 13 integriert sein. In diesem Fall kann sie eine besonders kompakte Bauform für das Gehäuse 1 ergeben.

Vorliegend sind der Fluidanschluss 3 und der elektrische Anschluss 4 als separate Teile an einer der zwei Stirnseiten 14, insbesondere dem Lagerschild 13 angeordnet. Beispielsweise kann der elektrische Anschluss 4 als Klemmenkasten 40 ausgeführt sein. Der elektrische Anschluss 4 umfasst vorliegend mehrere Phasenanschlüsse 41 zum Kontaktieren mehrerer Phasenstränge 42 und/oder Wicklungen der elektrischen Maschine 2. Insbesondere ist die elektrische Maschine 2 als Drehstrommaschine ausgebildet, weshalb drei Phasenanschlüsse 41 und drei Phasenstränge 42 vorhanden sind.

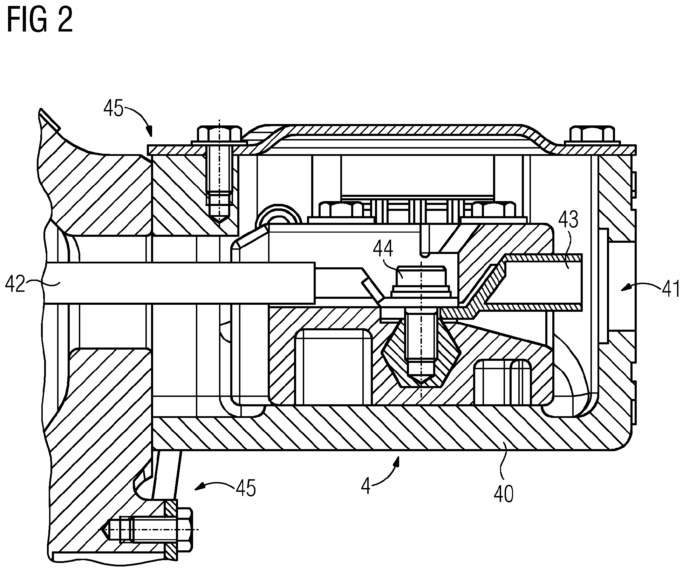

FIG 2 zeigt den Klemmenkasten 40 beispielhaft einer schematischen Schnittansicht. Über ein Befestigungselement 44, vorliegend eine Schraube, ist einer der Phasenstränge 42 leitend mit einem Kabelschuh 43 kontaktiert. Der Kabelschuh 43 ist dazu ausgebildet, eine externe Leitung, beispielsweise ein Kabel oder einen Draht, aufzunehmen. Auf diese Weise ist ein Versorgen der elektrischen Maschine 2 mit elektrischer Energie ermöglicht. Über den elektrischen Anschluss 4 ist die elektrische Maschine 2 mit einer elektrischen Energiequelle, beispielsweise einem Generator oder einem elektrischen Energiespeicher, verbindbar. Die beispielhaft in der Schnittansicht gezeigte Anordnung kann für mehrere der Phasenanschlüsse 41 analog ausgeführt sein. Der Klemmenkasten 40 kann über eine Befestigungsanordnung 45 an dem Gehäuse 1, insbesondere einer der Stirnseiten 14 oder dem Lagerschild 13, angeordnet sein. Mittels eines abnehmbaren elektrischen Anschlusses 4 kann der elektrische Anschluss 4 für verschiedene Anwendungen der elektrischen Maschine 2 angepasst werden. Durch die vorliegende Anordnung des elektrischen Anschlusses 4 an der Stirnseite 14 ist eine besonders leichte Handhabung des elektrischen Anschlusses 4 und ein besonders leichtes Kontaktieren der elektrischen Maschine 2 ermöglicht.

FIG 3 zeigt der Fluidkanal 12. Der Fluidkanal 12 erstreckt sich vorliegend mehrerer förmig über die gesamte Gehäusewandung 10. Vorzugsweise ist der Fluidkanal 12 derart ausgeformt, dass das Fluid 15 zunächst in Bereiche der elektrischen Maschine 2 beziehungsweise des Gehäuses 1 geleitet wird, die sich in einem Betrieb der elektrischen Maschine 2 am meisten erwärmen. Der Fluidkanal 12 ist vorliegend über Durchführungen 32 mit dem Fluidanschluss 3 verbunden. Insbesondere ist ein erstes Ende 33 des Fluid Kanals 12 mit dem Zulauf 30 verbunden. Insbesondere ist ein zweites Ende 34 des Fluidkanals 12 mit dem Ablauf 31 verbunden. Die Durchführungen 32 sind vorliegend durch eine der Stirnseiten 14, insbesondere durch das Lagerschild 13, in durchgeführt.

Aufgrund der Anordnung des Fluidanschlusses 3 an der Stirnseite 14 des Gehäuses 1 erstreckt sich der Fluidkanal 12 und/oder der Kühlmantel 11 in axialer Richtung beziehungsweise bezüglich der axialen Ausrichtung 54 über das gesamte Gehäuse 1. Insbesondere erstreckt sich der Fluidkanal 12 und/oder der Kühlmantel 11 über die gesamte Gehäusewandung 10. Die Anordnung des Fluidanschlusses 3 an der Stirnseite 14 ermöglicht somit eine besonders vorteilhafte Kühlung der elektrischen Maschine 2. Dadurch, dass der Zulauf 30 und der Ablauf 31 nebeneinander an derselben Stirnseite 14 angeordnet sind, ist eine besonders leichte Handhabung und ein besonders leichtes Anschließen des Fluidanschlusses 3 an ein Kühlsystem ermöglicht.

Dadurch, dass der elektrische Anschluss 4 und/oder der Fluidanschluss 3 an der Stirnseite 14 innerhalb des Ausdehnungsradius 53 angeordnet sind, kann der radial begrenzte Einbauraum durch die elektrische Maschine 2, insbesondere ein Aktivteil der elektrischen Maschine 2, beispielsweise ein Ständerdynamoblech oder ein Stator, bestmöglich ausgenutzt werden. Daraus kann sich eine maximale Leistungsfähigkeit der elektrischen Maschine 2 bezogen auf den Einbauraum ergeben. Dadurch, dass sich der Fluidkanal 12 beziehungsweise der Kühlmantel 11 in axialer Richtung über das gesamte Gehäuse 1 und/oder über die gesamte Gehäusewandung 10 erstrecken, kann eine bestmögliche Kühlung der elektrischen Maschine 2 beziehungsweise des Aktivteils ermöglicht sein. Der Kühlmantel 11 kann zweiteilig ausgeführt sein. Beispielsweise ist der Kühlmantel 11 als ein Rohr auf das Gehäuse 1 aufgeschrumpft und bildet anschließend die Gehäusewandung 10 aus. Beispielsweise ist der Fluidkanal 12 durch eine in ein Innenteil des Kühlmantels 11 eingelassene Form ausgebildet, welche nach außen hin durch die Gehäusewandung 10, welche insbesondere auf das Innenteil aufgeschrumpft ist, abgedichtet ist.

## Patentansprüche

1. Gehäuse (1) für eine elektrische Maschine (2), mit
- einem elektrischen Anschluss (4), über welchen ein Versorgen der elektrischen Maschine (2) mit elektrischer Energie ermöglicht ist,
- einem Fluidkanal (12) zur Aufnahme eines Fluids (15) zur Kühlung der elektrischen Maschine (2), und
- einem Fluidanschluss (3), über welchen der Fluidkanal (12) mit dem Fluid (15) befüllbar und/oder entleerbar ist, wobei
- das Gehäuse (1) eine Gehäusewandung (10) aufweist, die eine axiale Ausdehnung (54) zwischen zwei Stirnseiten (14) entlang einer ersten Raumrichtung (50) und eine radiale Ausdehnung mit einem Ausdehnungsradius (53) entlang zweier weiterer Raumrichtungen (51,52) aufweist,
**dadurch gekennzeichnet, dass**
- der elektrische Anschluss (4) und/oder der Fluidanschluss (3) an einer der Stirnseiten (14) und bezüglich der zwei weiteren Raumrichtungen (51,52) innerhalb des Ausdehnungsradius (53) angeordnet sind.

2. Gehäuse (1) nach Anspruch 1, **dadurch gekennzeichnet, dass** die Gehäusewandung (10) zumindest im Wesentlichen als Zylinder ausgebildet ist, wobei der Ausdehnungsradius (53) einem Zylinderradius und die zwei Stirnseiten (14) Schnittkreisflächen des Zylinders entsprechen.

3. Gehäuse (1) nach Anspruch 1 oder 2, **dadurch gekennzeichnet, dass** der Fluidanschluss (3) einen Zulauf (30) und einen Ablauf (31) umfasst.

4. Gehäuse (1) nach einem der vorhergehenden Ansprüche, **dadurch gekennzeichnet, dass** der elektrische Anschluss (4) mehrere Phasenanschlüsse (41) umfasst.

5. Gehäuse (1) nach einem der vorhergehenden Ansprüche, **dadurch gekennzeichnet, dass** der elektrische Anschluss (4) mittels eines Klemmenkastens (40) realisiert ist.

6. Gehäuse (1) nach einem der vorhergehenden Ansprüche, **dadurch** g**ekennzeichnet**, dass die zwei Stirnseiten (14) jeweils als Lagerschild (13) ausgebildet sind, wobei der elektrische Anschluss (4) und/oder der Fluidanschluss (3) als Teil des Lagerschildes (13) ausgebildet sind.

7. Gehäuse (1) nach einem der Ansprüche 1 bis 5, **dadurch gekennzeichnet , dass** der elektrische Anschluss (4) und/oder der Fluidanschluss (3) jeweils als separates Teil an einer der zwei Stirnseiten (14) angeordnet sind.

8. Gehäuse (1) nach einem der vorhergehenden Ansprüche, **dadurch gekennzeichnet, dass** der Fluidkanal (12) Teil eines Kühlmantels (11) ist und der Fluidanschluss (3) über Durchführungen (32) durch eine der Stirnseiten (14) hindurch mit dem Fluidkanal (12) beziehungsweise dem Kühlmantel (11) verbunden ist.

9. Gehäuse (1) nach Anspruch 8, **dadurch gekennzeichnet, dass** sich der Fluidkanal (12) und/oder der Kühlmantel (11) in axialer Ausdehnung (54) über das gesamte Gehäuse (1) erstreckt.

10. Elektrische Maschine (2) mit einem Gehäuse (1) nach einem der vorhergehenden Ansprüche.

11. Fahrzeug mit einer elektrischen Maschine (2) nach Anspruch 10.
